# EUROPEAN PATENT SPECIFICATION

(11) **EP 3 440 237 B1**
(45) Date of publication and mention of the grant of the patent: **08.09.2021**
(21) Application number: 17723165.1
(22) Date of filing: 31.03.2017
(51) Int. Cl.: C25B 1/04, C25B 9/23, C25B 9/73, C25B 11/095, C25B 13/08, C08J 5/22

(54) **WATER ELECTROLYZERS**
WASSERELEKTROLYSEURE
ÉLECTROLYSEURS D'EAU

(30) Priority: 04.04.2016 US 201615090477; 06.01.2017 US 201715400775; 16.01.2017 US 201715406909
(43) Date of publication of application: 13.02.2019
(73) Proprietor: Dioxide Materials, Inc., Boca Raton, Florida 33431 (US)
(72) Inventor: MASEL, Richard I., Boca Raton Florida 33433 (US); LIU, Zengcai, Boca Raton Florida 33486 (US)
(74) Representative: Beyer, Andreas
(86) International application number: PCT/US2017/025626
(87) International publication number: WO 2017/176598

(56) References cited:
- WO-A1-2016/064440
- WO-A1-2016/064447
- JP-A- H02 166 128
- BENCAI LIN ET AL: "Alkaline Stable C2-Substituted Imidazolium-Based Anion-Exchange Membranes", CHEMISTRY OF MATERIALS, vol. 25, no. 9, 14 May 2013 (2013-05-14), pages 1858-1867, XP055189117, ISSN: 0897-4756, DOI: 10.1021/cm400468u
- WEI LI ET AL: "Novel anion exchange membranes based on polymerizable imidazolium salt for alkaline fuel cell applications", JOURNAL OF MATERIALS CHEMISTRY, vol. 21, no. 30, 1 January 2011 (2011-01-01), page 11340, XP055189111, ISSN: 0959-9428, DOI: 10.1039/c1jm11093d

## Description

### Field of the Invention

The field of the invention is electrochemistry. The devices, systems and compositions described herein involve the electrolysis of water.

### Background of the Invention

The electrolysis of water is presently used as a source of hydrogen in, for example, hydrogen filling stations and chemical plants, and as a way of storing excess renewable energy using a technology called "power to gas".

There are two main types of low temperature electrolyzers: proton exchange membrane (PEM) electrolyzers and alkaline water electrolyzers. PEM electrolyzers are able to operate at current densities around 1 A/cm² at cell voltages less than 2 V, and can be turned on and off quickly. Unfortunately, PEM electrolyzers typically require the use of precious metal catalysts, such as platinum or iridium. This is a significant economic limitation.

In contrast, the present generation of alkaline water electrolyzers do not require the use of precious metals; instead, base metal catalysts can be used. Unfortunately, the present generation of alkaline water electrolyzers typically operate at lower current densities than PEM electrolyzers. This raises the capital equipment cost.

For example, U.S. Patent No. 4,445,994 notes that alkaline water electrolyzers operate at 200 - 300 mA/cm² (0.2 - 0.3 A/cm²) at cell potentials of 1.8 - 2 V. U.S.

Patent 4,445,994 also indicates that one can obtain currents of 1 A/cm² by increasing the cell temperature to 110°C, but as pointed out in U.S. patent application Serial No. 15/029,952 (published as US2016/0237578), the upper temperature limit of a practical alkaline water electrolyzer is 80-90°C, since one observes excessive corrosion above 80-90°C in these high pH systems (for example, 1 M KOH electrolyte.) Recently, U.S. patent application Serial No. 15/103,924 (published as US2016/0312371) disclosed an improved electrolyzer design that can obtain 40 A/dm² = 0.4 A/cm² at 80°C and 1.9V. This is a significant improvement, but still below the performance of a PEM electrolyzer.

Lin et al. in "Alkaline Stable C2-Substituted Imidazolium-Based Anion-Exchange Membranes", Chemistry of materials, vol. 25, no. 9, pages 1858-1867 investigates the alkaline stability of imidazolium salts and imidazolium-based alkaline anion-exchange membranes.

JPH02166128 discloses a membrane obtained by introducing cation-exchange groups into the surface of an anion exchange membrane and bonding a cation exchange membrane thereto

WO 2016/064440 A1 and WO 2016/064447 A1 disclose further electrolyzers and membranes.

### Summary of the Invention

The objective of this disclosure is to provide an alkaline electrolyzer design with base metal catalysts that can provide even higher current densities than those reported in U.S. patent application Serial No. 15/103,924 (published as US2016/0312371) at temperatures of 80°C or less.

The device according to the invention is defined in claim 1 and comprises:
(a) an anode comprising a quantity of anode catalyst, wherein said anode catalyst comprises a metal catalyst substantially free of Ru, Rh, Pd, Ag, Re, Os, Ir, Pt, and Au;;
(b) a cathode comprising a quantity of cathode catalyst, wherein said cathode catalyst comprises a metal catalyst substantially free of Ru, Rh, Pd, Ag, Re, Os, Ir, Pt, and Au, the cathode having a cathode reactant introduced thereto via at least one cathode reactant flow channel;
(c) a polymer electrolyte membrane interposed between the anode and the cathode; and
(d) a source of electrical energy that applies a voltage between the anode and cathode,
wherein said polymer electrolyte membrane comprises a terpolymer of styrene, vinylbenzyl-Rs wherein Rs is a positively charged cyclic amine group, and vinylbenzyl-Rx, wherein Rx is at least one constituent selected from the group consisting of CI or OH, and wherein the total weight of the vinylbenzyl-Rx groups is at least 1% of the total weight of the membrane.

The anode and cathode catalysts comprise base metal catalysts. The polymer electrolyte membrane comprises a polymer of styrene, vinylbenzyl-Rₛ, and vinylbenzyl-Rₓ wherein Rₛ is a positively charged cyclic amine group, Rₓ is at least one constituent selected from the group consisting CI, OH, and a reaction product between an OH or CI and a species other than a simple amine or a cyclic amine, and the total weight of the vinylbenzyl-Rₓ groups is greater than 0.3% of the total weight of the membrane. Preferred features are defined in the dependent claims.

Preferably the ion conducting membrane comprises a copolymer of styrene and vinylbenzyl-Rₛ. wherein Rₛ is a positively charged cyclic amine group.

More preferably, the ion conducting membrane comprises a polymer of styrene, vinylbenzyl-Rₛ, and vinylbenzyl-Rₓ wherein Rₛ is a positively charged cyclic amine group, Rₓ is at least one constituent selected from the group consisting CI, OH, and a reaction product between an OH or CI and a species other than a simple amine or a cyclic amine, and the total weight of the vinylbenzyl-Rₓ groups is greater than 0.3% of the total weight of the membrane.

In a preferred embodiment, the total weight of the vinylbenzyl-Rₛ groups is between 15% and 90% of the total weight of membrane.

In a preferred embodiment, Rₛ is selected from the group consisting of imidazoliums, pyridiniums, pyrazoliums, pyrrolidiniums, pyrroliums, pyrimidiums, piperidiniums, indoliums, triaziniums, preferably imidazoliums and pyridiniums.

In a preferred embodiment of the polymeric composition, Rₛ is an imidazolium. The imidazolium is preferably an alkylimidazolium, more preferably tetramethylimidazolium.

In a preferred embodiment of the polymeric composition, Rₛ is a pyridinium. The pyridinium is preferably an alkylpyridinium

In a preferred embodiment, the polymer will have a molecular weight between 1,000 and 10,000,000 atomic units (A.U.) preferably between 10,000 and 1,000,000 A.U., most preferably between 25,000 and 250,000 A.U.

In a preferred embodiment, the polymeric composition is in the form of a membrane. The membrane has a preferred thickness of from 10 to 300 micrometers.

### Brief Description of the Drawings

FIG. 1 is an exploded side view of a fuel cell hardware assembly including a membrane electrode assembly interposed between two fluid flow field plates having reactant flow channels formed in the major surfaces of the plates facing the electrodes.
FIG. 2 is an exploded side view of a fuel cell hardware assembly including a membrane electrode assembly having integral reactant flow channels interposed between two separator layers.
FIG 3 is a plot of cell voltage as a function of time for the test described in Specific Example 1.

### Detailed Description of Illustrative Embodiments)

It is understood that the process is not limited to the particular methodology, protocols and reagents described herein, as these can vary as persons familiar with the technology involved here will recognize. It is also to be understood that the terminology used herein is used for the purpose of describing particular embodiments only, and is not intended to limit the scope of the process. It also is to be noted that as used herein and in the appended claims, the singular forms "a," "an," and "the" include the plural reference unless the context clearly dictates otherwise. Thus, for example, a reference to "a linker" is a reference to one or more linkers and equivalents thereof known to those familiar with the technology involved here. Similarly, the phrase "and/or" is used to indicate one or both stated cases can occur, for example, A and/or B includes (A and B) and (A or B).

Unless defined otherwise, technical and scientific terms used herein have the same meanings as commonly understood by one of ordinary skill in the art to which the process pertains. The embodiments of the process and the various features and advantageous details thereof are explained more fully with reference to the non-limiting embodiments and/or illustrated in the accompanying drawings and detailed in the following description. It should be noted that the features illustrated in the drawings are not necessarily drawn to scale, and features of one embodiment can be employed with other embodiments as a person familiar with the technology here would recognize, even if not explicitly stated herein.

Any numerical value ranges recited herein include all values from the lower value to the upper value in increments of one unit, provided that there is a separation of at least two units between any lower value and any higher value. As an example, if it is stated that the concentration of a component or value of a process variable such as, for example, size, angle size, pressure, time and the like, is, for example, from 1 to 98, specifically from 20 to 80, more specifically from 30 to 70, it is intended that values such as 15 to 85, 22 to 68, 43 to 51, 30 to 32, and the like, are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value are to be treated in a similar manner.

Moreover, provided immediately below is a "Definitions" section, where certain terms related to the process are defined specifically. Particular methods, devices, and materials are described, although any methods and materials similar or equivalent to those described herein can be used in the practice or testing of the process.

### Definitions

The term "polymer electrolyte membrane" refers to both cation exchange membranes, which generally comprise polymers having multiple covalently attached negatively charged groups, and anion exchange membranes, which generally comprise polymers having multiple covalently attached positively charged groups. Typical cation exchange membranes include proton conducting membranes, such as the perfluorosulfonic acid polymer available under the trade designation NAFION from E. I. du Pont de Nemours and Company (DuPont) of Wilmington, DE.

The term "anion exchange membrane electrolyzer" as used here refers to an electrolyzer with an anion-conducting polymer electrolyte membrane separating the anode from the cathode.

The term "Hydrogen Evolution Reaction," also called "HER," as used here refers to the electrochemical reaction 2H⁺ + 2e⁻ → H₂.

The term "MEA" as used here refers to a membrane electrode assembly.

The term "Millipore water" is water that is produced by a Millipore filtration system with a resistivity of at least 18.2 megaohm-cm.

The term "imidazolium" as used here refers to a positively charged ligand containing an imidazole group. This includes a bare imidazole or a substituted imidazole. Ligands of the form: 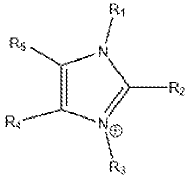 where R₁- R₅ are each independently selected from hydrogen, halides, linear alkyls, branched alkyls, cyclic alkyls, heteroalkyls, aryls, heteroaryls, alkylaryls, heteroalkylaryls, and polymers thereof, such as the vinyl benzyl copolymers described herein, are specifically included.

The term "pyridinium" as used here refers to a positively charged ligand containing a pyridine group. This includes a bare pyridine or a substituted pyridine. Ligands of the form: 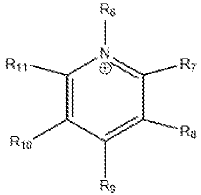 where R₆-R₁₁ are each independently selected from hydrogen, halides, linear alkyls, branched alkyls, cyclic alkyls, heteroalkyls, aryls, heteroaryls, alkylaryls, heteroalkylaryls, and polymers thereof, such as the vinyl benzyl copolymers described herein, are specifically included.

The term "phosphonium" as used here refers to a positively charged ligand containing phosphorous. This includes substituted phosphorous. Ligands of the form:

P⁺(R₁₂R₁₃R₁₄R₁₅)

where R₁₂-R₁₅ are each independently selected from hydrogen, halides, linear alkyls, branched alkyls, cyclic alkyls, heteroalkyls, aryls, heteroaryls, alkylaryls, heteroalkylaryls, and polymers thereof, such as the vinyl benzyl copolymers described herein, are specifically included.

The term "positively charged cyclic amine" as used here refers to a positively charged ligand containing a cyclic amine. This specifically includes imidazoliums, pyridiniums, pyrazoliums, pyrrolidiniums, pyrroliums, pyrimidiums, piperidiniums, indoliums, triaziniums, and polymers thereof, such as the vinyl benzyl copolymers described herein.

The term "simple amine" as used here refers to a species of the form

N(R₁₆R₁₇R₁₈)

wherein R₁₆- R₁₈ are each independently selected from hydrogen, linear alkyls, branched alkyls, cyclic alkyls, heteroalkyls, aryls, heteroaryls, alkylaryls, and heteroalkylaryls, but not polymers.

The term "precious metal" as used here refers to one or more of Ru, Rh, Pd, Ag, Re, Os, Ir, Pt, and Au.

The term "base metal catalyst" as used here refers to a catalyst that is substantially free of precious metals.

### Specific Description

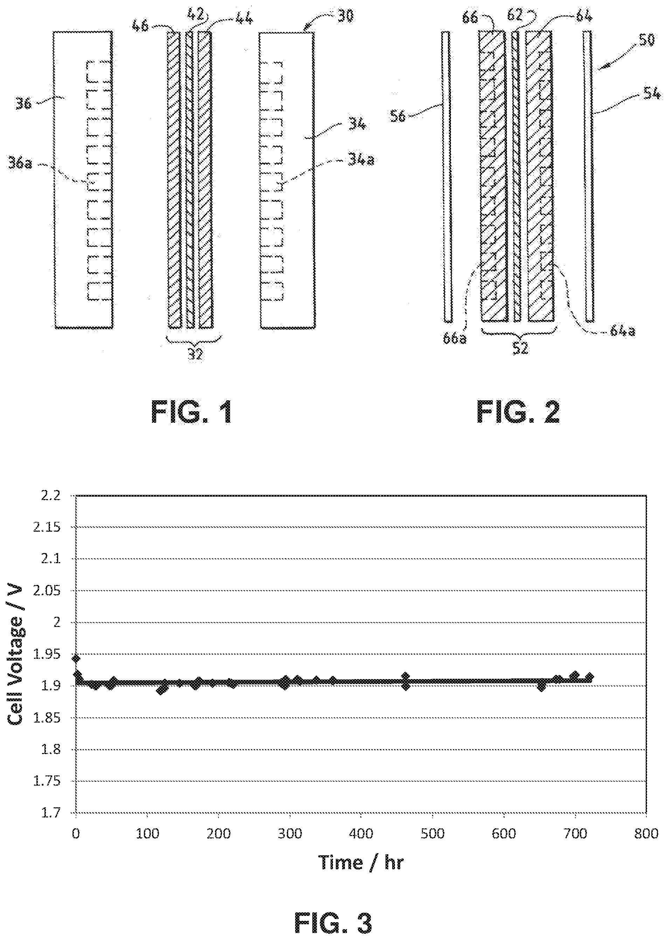

FIG. 1 illustrates a fuel cell hardware assembly 30, which includes a membrane electrode assembly 32 interposed between rigid flow field plates 34 and 36, typically formed of graphite or a graphite composite material. Membrane electrode assembly 32 consists of a polymer electrolyte (ion exchange) membrane 42 interposed between two electrodes, namely, anode 44 and cathode 46. Anode 44 and cathode 46 are typically formed of porous electrically conductive sheet material, such as carbon fiber paper, and have planar major surfaces. Electrodes 44 and 46 have a thin layer of catalyst material disposed on their maj or surfaces at the interface with membrane 42 to render them electrochemically active.

As shown in FIG. 1, anode flow field plate 34 has at least one open faced channel 34a engraved, milled or molded in its major surface facing membrane 42. Similarly, cathode flow field plate 36 has at least one open faced channel 36a engraved, milled or molded in its major surface facing membrane 42. When assembled against the cooperating surfaces of electrodes 44 and 46, channels 34a and 36a form the reactant flow field passages for the anode reactant stream (if any) and cathode reactant stream (comprising water, in the case of the present water electrolyzer,) respectively.

Turning to FIG. 2, a fuel cell hardware assembly 50 employs a membrane electrode assembly 52 having integral reactant fluid flow channels. Fuel cell hardware assembly 50 includes membrane electrode assembly 52 interposed between lightweight separator layers 54 and 56, which are substantially impermeable to the flow of reactant fluid therethrough. Membrane electrode assembly 52 consists of a polymer electrolyte (ion exchange) membrane 62 interposed between two electrodes, namely, anode 64 and cathode 66. Anode 64 and cathode 66 are formed of porous electrically conductive sheet material, such as carbon fiber paper. Electrodes 64 and 66 have a thin layer of catalyst material disposed on their major surfaces at the interface with membrane 62 to render them electrochemically active.

As shown in FIG. 2, anode 64 has at least one open faced channel 64a formed in its surface facing away from membrane 62. Similarly, cathode 66 has at least one open faced channel 66a formed in its surface facing away from membrane 62. When assembled against the cooperating surfaces of separator layers 54 and 56, channels 64a and 66a form the reactant flow field passages for the anode and cathode reactant streams, respectively.

During operation, reactants or a solution containing reactants is fed into the cell. Then a voltage is applied between the anode and the cathode, to promote an electrochemical reaction.

Without further elaboration, it is believed that persons familiar with the technology involved here using the preceding description can utilize the claimed electrolyzer to full extent. The following examples are illustrative only, and are not meant to be an exhaustive list of all possible embodiments, applications or modifications of the claimed electrolyzer.

### Specific Example 1

The objective of this example was to demonstrate an alkaline electrolyzer with base metal catalysts that is able to obtain a current per unit area of the cell of 1 A/cm² at an applied voltage of 2 V or less and temperatures of 80°C or less.

The cell contained:
(a) an anode comprising a quantity of anode catalyst, the anode having an anode reactant introduced thereto via at least one anode reactant flow channel;
(b) a cathode comprising a quantity of cathode catalyst, the cathode having a cathode reactant introduced thereto via at least one cathode reactant flow channel;
(c) a polymer electrolyte membrane interposed between the anode and the cathode; and
(d) a source of electrical energy that applies a voltage between the anode and cathode,
wherein the anode and cathode catalysts do not include precious metals and the polymer electrolyte membrane comprises a polymer of styrene, vinyl-benzyl-chloride (VBC) and vinylbenzyl-Rₛ, where Rₛ is a positively charged cyclic amine.

A membrane was prepared as set forth below.

The first inhibitor-free VBC was prepared by adding a volume V of VBC, (Sigma-Aldrich, Saint Louis, MO) and a volume equal to V/4 of 4% aqueous sodium hydroxide into a separatory funnel, followed by agitating the funnel to mix the water and VBC, then decanting the VBC. The process was repeated five times until the water layer did not show visible color change. The procedure was repeated using pure water instead of sodium hydroxide solution until the water layer pH was neutral. Washed VBC was placed into a freezer overnight before weighing to convert residual water to mainly ice, and the ice was then separated from styrene by filtration or decantation.

Next, inhibitor-free styrene was prepared by feeding styrene (Sigma-Aldrich) through a 60 mL syringe (HSW, Tuttlingen, DE) packed with Sigma-Aldrich 311340 Inhibitor remover.

Poly(4-vinylbenzyl chloride-co-styrene) was then synthesized by heating a solution of inhibitor-free styrene (Sigma-Aldrich) (172.3 g, 1.65 mol) and 4-vinylbenzyl chloride (Sigma-Aldrich) (143.1 g, 0.94 mol) in chlorobenzene (Sigma-Aldrich) (250 g) at 60-65°C in an oil bath for 22 hours under nitrogen gas with AIBN (α,α'-Azoisobutyronitrile, Sigma-Aldrich) (2.9635 g, 0.94 wt% based on the total monomers weight) as initiator. The copolymer was precipitated in methanol, then washed thoroughly and dried at 60°C overnight.

Next 1,2,4,5-tetramethylimidazole (TCI, Japan) (3.700 g, 0.0298 mol), above-synthesized poly(4-VBC-co-St) (10 g), anhydrous ethanol (17 g, Sigma-Aldrich), anhydrous toluene (12.5 g, Sigma-Aldrich), divinylbenzene (DVB) (0.2 g, 0.00154 mol in 1 g ethanol) and AIBN (0.00301 g in 0.97 g ethanol) were mixed under the protection of nitrogen flow. The mixture was stirred and heated to 78°C for about 1 hour. When the solution turned clear, the reaction temperature was decreased to 55°C and maintained for 71 hours to obtain the polymer.

The membranes were prepared by casting the polymer solutions prepared above directly onto a polyethylene terephthalate (PET) liner. The thickness of the solution on the liner was controlled by a film applicator (MTI Corporation, Richmond, CA) with an adjustable doctor blade. The membranes were then dried in a vacuum oven with temperature increased to 70°C and held for 1 hour. After one more hour in the vacuum oven with temperature slowly decreased, the membrane was taken out of the oven and put inside a 1 M KOH solution overnight, during which time the membrane fell from liner. The KOH solution was changed twice, each with a couple of hours of immersion, such that the membrane chloride ions were substantially completely exchanged, so that the membranes were converted into the hydroxide form. This also made the polymer insoluble in most solvents, suggesting that some residual vinyl benzyl chlorides and/or the hydroxides from the soaking solution have reacted with some other species to form something insoluble.

NMR spectroscopy of the polymer solution from before membrane casting indicates that in the polymer about 40% of the VBC did not react with the tetramethylimidazole. The weight of the VBC that did not react with the tetramethylimidazole represented about 14% of the total weight of the membrane. Thus, the KOH-soaked, ion exchanged membrane is actually a terpolymer of styrene, vinylbenzyl chloride (and/or hydroxide) and vinylbenzyl tetramethylimidazolium, with negative counterions of hydroxide (and perhaps traces of residual chloride.)

A cathode was prepared as follows: 100 mg of NiFeCo nanoparticles (US Research Nanomaterials, Inc., Houston, TX) were suspended in 2 ml of isopropanol, 1 ml of deionized water and 0.2 ml of 5% dispersion of ionomer available under the trade designation NAFION (DuPont.) The mixture was ultrasonicated in a water bath for 10 minutes. The cathode ink was spray coated onto a 5 cm x 5 cm of Sigracet 39 BC carbon paper (SGL Group, Meitingen Germany). The electrode was dried at 80°C for 20 minutes in an oven and cut into 4 pieces of 2.5 cm x 2.5 cm for testing. The catalyst loading was about 3 mg/cm².

The anode for the oxygen evolution reaction was prepared in a similar way but with NiFeOx nanoparticles (US Research Nanomaterials, Inc.) instead of NiFeCo alloy nanoparticles. The catalyst ink was spray coated onto 6 cm x 6 cm stainless steel fiber cloth (AISI 316L-WNR, Bekaert, Zwevegem, Belgium.) The electrode was dried at 80°C for 20 minutes in an oven and cut into 4 pieces of 3 cm x 3 cm for testing. The actual loading was about 2 mg/cm².

The membrane prepared above was sandwiched between the NiFeCo cathode and NiFeOx anode as described above, and mounted into 5 cm² fuel cell hardware (Fuel Cell Technologies, Albuquerque, NM). The anode graphite flow field was replaced with a Ni flow field to alleviate the carbon corrosion in the anode. 1 M KOH was fed at 2 ml/min to the cathode and anode chambers from the same container with the chamber outputs going to two separation units, which units were used to separate gas from liquid before the recirculating liquid re-entered the main container. The cell was heated and maintained at 60°C with a PID (proportional-integral-derivative) controller. The cell was held at constant current density of 1 A/cm² and the cell voltage was monitored.

FIG. 3 shows the results of the experiments. Notice that one can maintain 1 A/cm² at 60°C at about 1.9 volts for hundreds of hours.

Experiments have also been conducted at 80°C. In that case the current rose to 1.6 A/cm².

It is useful to compare these results to those previously reported. In U.S. Patent No. 4,445,994, the applicants were able to obtain 1 A/cm², but needed to operate at 110°C to obtain that current level. Kamei et al. U.S. patent application Serial No. 15/029,952 (published as US2016/0237578) indicates that such a high temperature is not practical.

U.S. patent application Serial No. 15/103,924 (published as US2016/0312371) reported a current density of only 0.4 A/cm² at 80°C (the practical temperature limit) at a voltage of 1.9V

The present water electrolyzer showed 1 A/cm² at 60°C and a cell voltage of 1.9 V. It also showed 1.6 A/cm² at 80°C and a cell voltage of 1.9 V. Thus, the performance exceeded that of the previously reported alkaline electrolyzers at practical conditions.

The results above show that the alkaline water electrolyzer of the present invention can provide electrolyzer performance superior to that of the alkaline electrolyzers reported previously.

In co-pending and co-owned U.S. patent application Serial No. 15/400,775 (publication number US 2017/128930) filed on January 6, 2017, it was shown that an electrolyzer can still operate when the total weight of the vinylbenzyl-Rₓ groups is less than 0.3% of the total weight of the membrane, but the mechanical stability was poor. The '775 application also shows that it is preferable for the total weight of the vinylbenzyl-Rₓ groups to be between 0.3% and 25% of the total weight of the membrane.

More preferably, the total weight of the vinylbenzyl-Rₓ groups is between 1% and 15% of the total weight of the membrane.

The data set forth in co-pending and co-owned U.S. patent application Serial No. 15/090,477 (published as US2016/0251766) shows preferably the total weight of the vinylbenzyl-Rₛ groups is at least 15% of the total weight of the membrane, preferably between 15% and 90% of the total weight of the membrane, most preferably between 25% and 80% of the total weight of the membrane.

While particular elements, embodiments and applications of the present invention have been shown and described, it will be understood that the invention is not limited thereto since modifications can be made by those skilled in the art without departing from the scope of the present disclosure, particularly in light of the foregoing teachings.

## Claims

1. A water electrolyzer comprising:
(a) an anode comprising a quantity of anode catalyst, wherein said anode catalyst comprises a metal catalyst substantially free of Ru, Rh, Pd, Ag, Re, Os, Ir, Pt, and Au;
(b) a cathode comprising a quantity of cathode catalyst, wherein said cathode catalyst comprises a metal catalyst substantially free of Ru, Rh, Pd, Ag, Re, Os, Ir, Pt, and Au, said cathode having at least one cathode reactant flow channel configured to introduce a cathode reactant;
(c) a polymer electrolyte membrane interposed between said anode and said cathode; and
(d) a source of electrical energy configured to apply a voltage between the anode and cathode,
wherein said polymer electrolyte membrane comprises a terpolymer of styrene, vinylbenzyl-Rₛ wherein Rₛ is a positively charged cyclic amine group, and vinylbenzyl-Rₓ, wherein Rₓ is at least one constituent selected from the group consisting of CI or OH, and wherein the total weight of the vinylbenzyl-Rₓ groups is at least 1% of the total weight of the membrane.

2. The water electrolyzer of claim 1, wherein the total weight of the vinylbenzyl-Rₛ groups in said polymer electrolyte membrane is between 15% and 90% of the total weight of the membrane.

3. The water electrolyzer of claim 1, wherein said polymeric membrane has a thickness of from 10 to 300 micrometers.

4. The water electrolyzer of claim 1, wherein the total weight of the vinylbenzyl-Rₓ groups in said polymer electrolyte membrane is between 1% and 25% of the total weight of the membrane.

5. The water electrolyzer of claim 4, wherein the total weight of the vinylbenzyl-Rₓ groups in said polymer electrolyte membrane is between 1% and 15% of the total weight of the membrane.

6. The water electrolyzer of claim 1, wherein said positively charged cyclic amine group is an imidazolium or a pyridinium.

7. The water electrolyzer of claim 6, wherein said positively charged cyclic amine group is an alkylpyridinium.

8. The water electrolyzer of claim 6, wherein said positively charged cyclic amine group is tetramethylimidazolium.

9. The water electrolyzer of claim 1, wherein said cathode reactant comprises water.

## Patentansprüche

1. Wasserelektrolyseur, mit:
(a) einer Anode, die eine Menge eines Anodenkatalysators enthält, wobei der Anodenkatalysator einen Metallkatalysator umfasst, der im Wesentlichen frei ist von Ru, Rh, Pd, Ag, Re, Os, Ir, Pt und Au,
(b) einer Kathode, die eine Menge eines Kathodenkatalysators enthält, wobei der Kathodenkatalysator einen Metallkatalysator umfasst, der im Wesentlichen frei ist von Ru, Rh, Pd, Ag, Re, Os, Ir, Pt und Au, wobei die Kathode mindestens einen Kathodenreaktantströmungskanal aufweist, der dazu ausgeführt ist, einen Kathodenreaktant einzuleiten,
(c) einer Polymerelektrolytmembran, die zwischen der Anode und der Kathode angeordnet ist, und
(d) einer Quelle elektrischer Energie, die dazu eingerichtet ist, eine Spannung zwischen der Anode und der Kathode aufzubringen,
wobei die Polymerelektrolytmembran ein Terpolymer aus Styrol, Vinylbenzyl-Rₛ, wobei Rₛ eine positiv geladene zyklische Amingruppe ist, und Vinylbenzyl-Rₓ umfasst, wobei Rₓ wenigstens ein Bestandteil ausgewählt aus der Gruppe bestehend aus Cl oder OH ist, und wobei das Gesamtgewicht der Vinylbenzyl-Rₓ Gruppen mindestens 1% des Gesamtgewichts der Membran beträgt.

2. Wasserelektrolyseur nach Anspruch 1, bei dem das Gesamtgewicht der Vinylbenzyl-Rₛ Gruppen in der Polymerelektrolytmembran zwischen 15% und 90% des Gesamtgewichts der Membran beträgt.

3. Wasserelektrolyseur nach Anspruch 1, bei dem die Polymermembran eine Dicke von 10 bis 300 Mikrometern hat.

4. Wasserelektrolyseur nach Anspruch 1, bei dem das Gesamtgewicht der Vinylbenzyl-Rₓ Gruppen in der Polymerelektrolytmembran zwischen 1% und 25% des Gesamtgewichts der Membran beträgt.

5. Wasserelektrolyseur nach Anspruch 4, bei dem das Gesamtgewicht der Vinylbenzyl-Rₓ Gruppen in der Polymerelektrolytmembran zwischen 1% und 15% des Gesamtgewichts der Membran beträgt.

6. Wasserelektrolyseur nach Anspruch 1, bei dem die positiv geladene zyklische Amingruppe ein Imidazolium oder ein Pyridinium ist.

7. Wasserelektrolyseur nach Anspruch 6, bei dem die positiv geladene zyklische Amingruppe ein Alkylpyridinium ist.

8. Wasserelektrolyseur nach Anspruch 6, bei dem die positiv geladene zyklische Amingruppe Tetramethylimidazolium ist.

9. Wasserelektrolyseur nach Anspruch 1, bei dem der Kathodenreaktant Wasser umfasst.

## Revendications

1. Électrolyseur d'eau comprenant:
(a) une anode comprenant une quantité de catalyseur d'anode, ledit catalyseur d'anode comprenant un catalyseur métallique pratiquement exempt de Ru, Rh, Pd, Ag, Re, Os, Ir, Pt, et Au;
(b) une cathode comprenant une quantité de catalyseur de cathode, ledit catalyseur de cathode comprenant un catalyseur métallique pratiquement exempt de Ru, Rh, Pd, Ag, Re, Os, Ir, Pt, et Au, ladite cathode ayant au moins un canal d'écoulement de produit de départ de cathode conçu pour introduire le produit de départ de cathode;
(c) une membrane échangeuse de protons intercalée entre ladite anode et ladite cathode; et
(d) une source d'énergie électrique conçue pour appliquer une tension entre l'anode et la cathode,
(e) ladite membrane échangeuse de protons comprenant un terpolymère de styrène, vinylbenzyle-Rₛ, Rₛ étant une groupe amine cyclique chargé positivement, et vinylbenzyle-Rₓ, Rₓ étant au moins un constituant sélectionné dans le groupe constitué de Cl et OH, et le poids total des groupes vinylbenzyle-Rₓ étant au moins 1% du poids total de la membrane.

2. Électrolyseur d'eau selon la revendication 1, le poids total des groupes vinylbenzyle-Rₓ dans ladite membrane échangeuse de protons étant compris entre 15% et 90% du poids total de la membrane.

3. Électrolyseur d'eau selon la revendication 1, ladite membrane échangeuse de protons ayant une épaisseur comprise entre 10 et 300 micromètres.

4. Électrolyseur d'eau selon la revendication 1, le poids total des groupes vinylbenzyle-Rₓ dans ladite membrane échangeuse de protons étant compris entre 1% et 25% du poids total de la membrane.

5. Électrolyseur d'eau selon la revendication 4, le poids total des groupes vinylbenzyle-Rₓ dans ladite membrane échangeuse de protons étant compris entre 1% et 15% du poids total de la membrane.

6. Électrolyseur d'eau selon la revendication 1 ledit groupe amine cyclique chargé positivement étant un imidazole ou un pyridinium.

7. Électrolyseur d'eau selon la revendication 6, ledit groupe amine cyclique chargé positivement étant un alkylpyridinium.

8. Électrolyseur d'eau selon la revendication 6, ledit groupe amine cyclique chargé positivement étant un tétraméthylimidazole.

9. Électrolyseur d'eau selon la revendication 1, ledit produit de départ de cathode comprenant de l'eau.
